# EUROPEAN PATENT APPLICATION

(11) **EP 1 615 323 A1**
(43) Date of publication of application: **11.01.2006**
(21) Application number: 05254219.8
(22) Date of filing: 05.07.2005
(51) Int. Cl.: H02K 41/03

(54) **Linear driving device**

(30) Priority: 06.07.2004 JP 2004199024
(71) Applicant: FANUC LTD, Minamitsuru-gun, Yamanashi 401-0597 (JP)
(72) Inventor: Kawai, Tomohiko, Minamitsuru-gun Yamanashi, 401-0304 (JP); Ebihara, Kenzo, Fanuc Dai3virakaramatsu, Minamitsuru-gun Yamanashi 401-0511 (JP); Minami, Hiroshi, Room 11-302, Minamitsuru-gun Yamanashi, 401-0511 (JP); Sogabe, Masatoyo, Gotenba-shi Shizuoka, 412-0043 (JP); Shimura, Yoshifumi, Fujiyoshida-shi Yamanashi, 403-0017 (JP)
(74) Representative: Billington, Lawrence Emlyn

(57) **Abstract**

A linear driving device that reduces a cogging force with a simple structure as opposed to a drive mechanism having an existing structure, deals with a plurality of cogging waveforms having different periods, and suppresses not only the cogging force but also pitching that is vertical oscillation. The device has a structure provided with a plurality of magnet arrays in which permanent magnets having different polarities are alternately and rectilinearly arranged in the same direction, and a plurality of coil modules having a plurality of teeth and slots fitted with armature coils. The arrangement distance between the coil modules disposed along the displacing direction of each of the magnet arrays equals the sum or remainder of the length corresponding to a half of any one of periods possessed by the cogging force generated when the coil modules move by one magnetic pole and an integer multiple of the length of a magnetic pole pair. The coil modules are connected to each other by a connecting member, and the connecting member makes relative motion along the magnet arrays.

## Description

### BACKGROUND OF THE INVENTION

### 1. Field of the Invention

The present invention relates to a linear driving device, and more specifically to a device that performs linear drive by causing coil modules to make relative motion with respect to permanent magnets of a linear motor or the like. The linear driving device can be used as an actuator for table feeding and the like of a machine tool or as a drive mechanism of a transport device.

### 2. Description of Related Art

In some cases, a linear driving device is provided as an actuator for table feeding and the like of a machine tool or as a drive mechanism of a transport device.

Known as such a drive mechanism is a drive mechanism of a linear motor or the like for causing armature blocks to make relative motion with respect to permanent magnets that are rectilinearly disposed. In this linear motor, there generates a cogging force attributable to the surface shapes of the permanent magnets and the shapes of slots of coils. The cogging force hampers the precision positioning and the smooth feeding.

A known method of reducing the cogging force applies a slotless, coreless motor. In the slotless, coreless motor, however, it is difficult to use sine waves as electromotive voltage. Accordingly, there is a problem in terms of smoothness of the drive. Another problem is that low rigidity between the coils and the machine makes it difficult to perform fast response control.

If the cogging force can be reduced by using slotted coils, this brings the advantage that electromotive voltage can be easily turned into sine waves, that the drive can be carried out smoothly, that the rigidity between the coils and the machine is increased, which enables control with a fast response, and that the magnets can be effectively used by narrowing gaps, which is advantageous costwise.

For example, the following documents are known as technologies of reducing the cogging force by means of the above-mentioned slotted coils.

Unexamined Japanese Patent Publication No. 11-308848 discloses a structure in which an armature is divided into three, and the first to third armatures are disposed at intervals equivalent to one third of an installation interval between permanent magnets, to thereby offset a cogging torque generated in each of the armatures. JP2000-278931A discloses a structure in which cogging thrust is offset between armature blocks by dephasing armature coils of the armature blocks at an electrical angle corresponding to a gap between the armature blocks. WO99/041825 discloses a structure in which an armature core is divided into a plurality of blocks, and the blocks are disposed at intervals determined by an electrical angle of 180° in a magnet pitch and the number of divisions, to thereby dephase the armature coils of the block cores located across the respective gaps at an electrical angle corresponding to the gaps. JP2002-101636A discloses a structure in which two sets of armatures are disposed in positions where they are shifted at an electrical angle of 180 degrees. JP3360606B discloses a structure in which right and left permanent magnets are disposed in shifted positions, and armature teeth are disposed in shifted positions.

In the structures described in the above documents, the armature coils are disposed differently with respect to the armature blocks, so that the armature coils have to be configured in disposition peculiar to each linear motor. Moreover, in order to reduce the cogging force of the existing linear motor, it is required that the armature coils be rearranged. As a result, there is the problem that the cost for improvement is increased.

Besides the problem of a cogging force that acts in a proceeding direction, the linear motor has another problem that there generates minute fluctuation with respect to a direction different from the proceeding direction, that is to say, a direction orthogonal to the proceeding direction (horizontal direction or vertical direction), which is produced in sync with the cogging force. In a liner drive device, a slide is generally limited in directions other than the proceeding direction. In some cases, however, there occurs minute fluctuation in a direction different from the proceeding direction of the slide. In the case of high-precision positioning, it is important to suppress the minute fluctuation that occurs in a different direction from the proceeding direction of the slide.

In the structures described the above documents, the arrangement interval of the armature coils is determined by the pitch of the permanent magnets, which produces the problem that there is no guarantee that a satisfactory suppressing effect is obtained with respect to the cogging force.

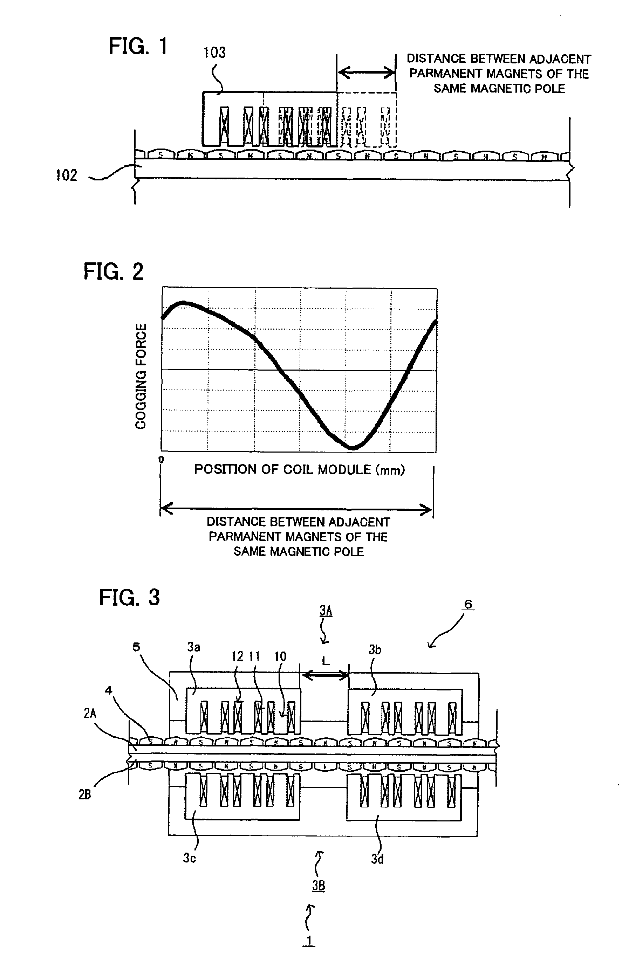

FIG. 1 is a view for explaining a positional relationship between a magnet array 102 in which permanent magnets are aligned in the displacing direction and an armature coil 103, and FIG. 2 is a view showing the fluctuation of a cogging force created at the time.

In a linear motor, when the armature coil 103 moves along the magnet array 102 by a distance between adjacent permanent magnets of the same magnetic pole (a north or south pole), a cogging force as shown in FIG. 2 is produced. The cogging force includes components of a plurality of cogging waveforms having different cycles. For example, in the motion made by the length of one pole, a one-cycle cogging waveform, a two-cycle cogging waveform, and a three-cycle cogging waveform are included. Although many of the components included in the cycles of cogging waveforms generally are shifted by an integer multiple, a relationship between the cycles is not necessarily an integral multiple.

According to a method that has been proposed, the cogging force is suppressed by setting the arrangement interval of armature coils on the basis of the pitch of permanent magnets. Therefore, the method can apply only to cogging waveforms of one kind of cycle, and cannot apply to a plurality of cogging waveforms having different cycles.

### SUMMARY OF THE INVENTION

The present invention reduces a cogging force with a simple structure utilizing elements of a driving mechanism of an existing structure. Moreover, the present invention copes with a plurality cogging waveforms having different cycles. Furthermore, the present invention suppresses not only the cogging force but also pitching that is vertical oscillation.

The present invention reduces a cogging force using slotted coils which are advantageous in that electromotive voltage of sine waves can be adopted, to enable smooth drive, control with quick response because of high rigidity of coil modules, and effective use of the magnets by narrowing gaps so that manufacturing cost is lowered.

According to an aspect of the present invention, a linear driving device comprises: a plurality of magnet arrays formed of permanent magnets arranged in parallel such that different magnetic poles thereof are aligned alternately; and a plurality of coil modules arranged along said magnet arrays and connected with one another to move relatively to said magnet arrays, each of said coil modules having teeth and slots fitted with armature coils, said coil modules being arranged with any one of arrangement distances obtained by respectively adding/subtracting lengths corresponding to halves of cycles of different cogging force elements produced when said coil module moves by a distance between adjacent permanent magnets of the same magnetic pole to/from multiples of the distance between the adjacent permanent magnets of the same magnetic pole.

With the above structure of the present invention, the coil modules have a common structure, regardless of arrangement positions in relation to the magnet arrays. This eliminates the necessity of forming coil modules exclusive to a drive mechanism with an existing structure, and provides a simple structure. Further, according to the structure of the present invention, it is possible to counteract the pitching by arranging the plurality of trains of coil modules along the magnet arrays.

Adjacent twos of the coil modules may form first coil-module pairs, the coil modules of each first coil-module pair being arranged with one of the arrangement distances. Adjacent twos of said first coil-module pairs form second coil-module pairs, the first coil-module pairs of each second coil-module pair being arranged with another of the arrangement distances. Successively, the adjacent twos of previous coil-module pairs may form subsequent coil-module pairs, the previous coil-module pairs of each subsequent coil-module pair being arranged with another of the arrangement distances.

This structure makes it possible to deal with the plurality of cycles of the cogging force components. Additionally, it can be arbitrarily determined as to which one of the arrangement distances is to be selected.

The plurality of magnet arrays may include at least one pair of magnet arrays arranged symmetrically with an axis of symmetry in a motion direction of said coil modules relative to said magnet arrays.

According to another aspect of the present invention, a linear driving device comprises: a first magnet array formed of permanent magnets arranged such that different magnetic poles thereof are alternately aligned; a second magnet arrays formed of permanent magnets arranged such that different magnetic poles thereof are alternately aligned in parallel with said first magnet array; a plurality of coil modules each having teeth and slots fitted with armature coils; and a connecting member for connecting said plurality of coil modules to move relatively to said first and second arrays of permanent magnets. The plurality of coil modules include a first coil module confronting said first magnet array, a second coil module confronting said first magnet array and spaced apart from said first coil module in a direction of motion of the coil modules by one of distances obtained by adding/subtracting halves of cycles of different cogging force components produced when said first coil module moves by the distance of the adjacent permanent magnets of the same magnetic pole to/from multiples of the distance of the adjacent permanent magnets of the same magnetic pole, and third and fourth coil modules confronting said second magnet array and arranged at positions corresponding to said first coil module and said second coil module, respectively.

In the above structure, coil modules of (2ⁿ) × 2 (n: integer greater than 0) may be provided to reduce n cycles of the different cogging force components. In this case, two units of coil modules of 2ⁿ⁻¹ may be arranged with one of the arrangement distances to confront one of said first magnet array and said second magnet array.

According to still another aspect of the present invention, a linear driving device comprises: a plurality of magnet arrays of permanent magnets arranged such that different magnetic poles are alternately aligned; and a plurality of coil modules each having a plurality of teeth and slots fitted with armature coils, wherein a first magnet array of the plurality of magnet arrays and a first coil module of the plurality of coil modules are arranged to confront each other to form a first set, a second magnet array of the plurality of magnet arrays and a second coil module of the plurality of coil modules are arranged parallel to said first set of the first magnet array and the first coil module, a third magnet array of the plurality of magnet arrays and a third coil module of the plurality of coil modules are arranged perpendicular to said first set of the first magnet array and the first coil module, and a fourth magnet array of the plurality of magnet arrays and a fourth coil module of the plurality of coil modules are arranged perpendicular to said second set of the second magnet array and the second coil module. Adjacent two of said first to fourth coil modules are displaced by one of distances obtained by adding/subtracting lengths corresponding to halves of cycles of the cogging force components to/from the multiples of the distance between the adjacent permanent magnets of the same magnetic pole, and said first to fourth coil modules are connected to move relatively to said first to fourth magnet arrays by a connecting member along said first to fourth magnet arrays.

In the above structure, coil modules of (2ⁿ) × 2 (n: integer greater than 0) may be provided to reduce n cycles of the different cogging force components. In this case, two units of coil modules of 2ⁿ⁻¹ are arranged with one of the arrangement distances perpendicularly with each other.

The linear driving device may further comprise a fluid bearing for movably supporting said connecting member relatively to said magnet arrays.

The linear driving device of the present invention is capable of suppressing pitching that is vertical oscillation by the structure in which a plurality of coil modules are arranged in the motion direction and connected with one another by the connecting member.

According to the present invention, it is possible to reduce the cogging force with the simple structure as opposed to a drive mechanism having an existing structure. The present invention is capable of dealing with a plurality of cogging waveforms having different cycles. The present invention is further capable of suppressing not only the cogging force but also the pitching that is vertical oscillation.

### BRIEF DESCRIPTION OF THE DRAWINGS

FIG. 1 is a view for explaining a positional relationship between a magnet array in which permanent magnets are arranged in a displacing direction and armature coils;
FIG. 2 is a view showing fluctuation of a cogging force;
FIG. 3 is a sectional view for explaining one structure example of a linear driving device according to the present invention;
FIG. 4 is a sectional view for explaining one structure example of a linear driving device according to the present invention;
FIGS. 5a and 5b are views each for explaining an example of a structure in which a magnet array and a coil module pair are arranged along two straight lines;
FIG. 6 is a view for explaining one structure example of the linear driving device according to the present invention;
FIG. 7 is a view for explaining one structure example of the linear driving device according to the present invention;
FIG. 8 is a view for explaining one structure example of the linear driving device according to the present invention;
FIGS. 9a to 9d are views for explaining a structure in which a cogging force having n kinds of cycles is reduced by using the linear driving device according to the present invention;
FIGS. 10a and 10b are views for explaining a structure in which a cogging force having n kinds of cycles is reduced by using the linear driving device according to the present invention; and
FIGS. 11a and 11b are views for explaining a structure in which a cogging force having n kinds of cycles is reduced by using the linear driving device according to the present invention.

### DETAILED DESCRIPTION

FIG. 3 is a sectional view for explaining one structure example of a linear driving device according to the present invention. The structure example shown in FIG. 3 is one in which a coil module pair including two coil modules is disposed along each magnet array of a magnet array pair.

In FIG. 3, a linear driving device 1 is formed of magnet arrays 2A, 2B and coil modules 3a-3d.

Each of the magnet arrays 2A, 2B are formed by alternately and rectilinearly arranging a plurality of permanent magnets 4 having different polarities. A rectilinear direction in which the permanent magnets 4 are arranged is a displacing direction of a moving body. In the structure example shown in FIG. 3, a first magnet array 2A and a second magnet array 2B are disposed such that magnet poles are located outside.

An armature block 6 has two coil module pairs 3A and 3B. A coil module pair 3A made up of the first coil module 3a and the second coil module 3b is disposed opposite the first magnet array 2A, whereas a coil module pair 3B made up of the third coil module 3c and the fourth coil module 3d is disposed opposite the second magnet array 2B. By so doing, the coil module pair 3A formed of the first coil module 3 a and the second coil module 3b, and the coil module pair 3B formed of the third coil module 3c and the fourth coil module 3d are disposed opposite each other across the magnet arrays 2.

Each of the coil modules 3a to 3d has slots 11 formed between teeth 10, and an armature coil 12 is wound within each of the slots 11. The coil modules 3a to 3d have a common structure.

Although FIG. 3 shows the example in which the four coil modules are disposed, the number of coil modules to be disposed is not limited to four, but more coil modules may be provided as mentioned below. Again in this case, the disposed coil modules differs from each other only in arrangement intervals, and a structure of the teeth, slots, armature coils and the like, are common to all the coil modules.

The four coil modules 3 a to 3d are connected by a connecting member 5 and move integrally with respect to the magnet arrays 2A and 2B. The connecting member 5 is one means of displacing the coil modules integrally. The connection is not necessarily done by means of the connecting member, and it is possible to utilize arbitrary fixing means, such as a structure for fixing a relative positional relationship by integral formation, as long as the fixing means achieves the above object.

An arrangement distance L between the coil module 3a and the coil module 3b here is the sum or remainder of length corresponding to a half of any one of cycles of components of a cogging force generated when the coil module 3a moves by a length of one magnetic pole pair which is a distance between adjacent permanent magnets of the same magnetic pole and an integral multiple of the length of one magnetic pole pair.

The cogging force includes a plurality of cyclic components as shown in FIG. 2. Generally, cyclic components that occur an integral number of times within the length of one magnetic pole pair, such as a cyclic component that occurs once in a length of one magnetic pole, a cyclic component that occurs twice, a cyclic component that occurs three times, and the like, are included. However, the cyclic components are not necessarily limited to those described above.

A cyclic component to be reduced is selected from the plurality of cycles included in the cogging force, and the sum or remainder of the length corresponding to a half of the cycle and an integer multiple of the length of a magnetic pole pair is defined as arrangement distance L between the coil module 3a and the coil module 3b. In case that there is a change by an integer multiple of the length of a magnetic pole pair, there is no influence upon the reduction of the cogging force even if the arrangement distance is increased by the above length as a relationship between the coil modules and the magnet arrays remains the same in terms of an electrical angle, thereby being used for an adjustment of distance between the coil module 3a and the coil module 3b.

Consequently, according to the structure of the present invention, it is possible to reduce the cyclic component to be reduced which is selected from the cyclic components of the cogging force generated in the actual linear driving device simply by setting the arrangement distance of the coil modules having a common structure.

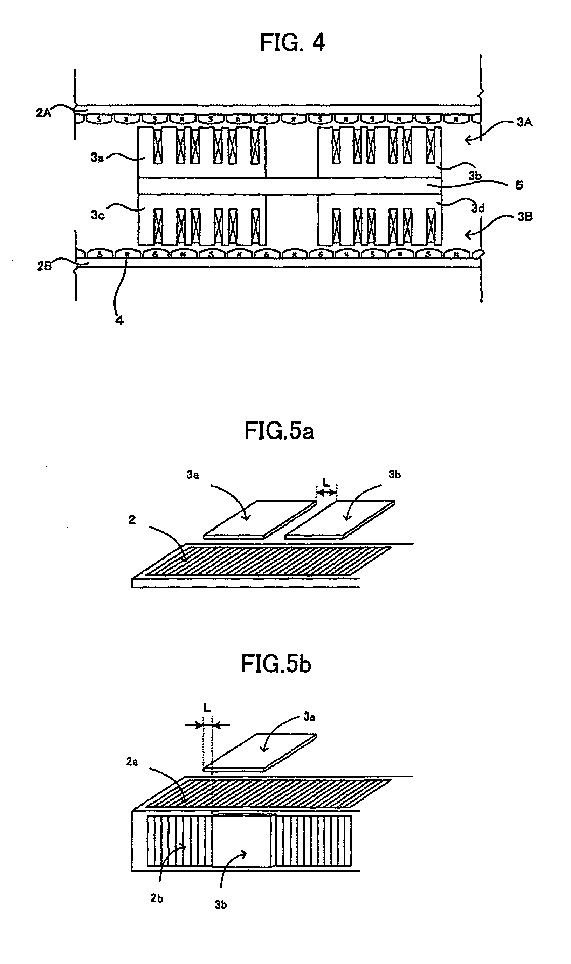

FIG. 4 shows an example in which the magnet arrays and the coil modules in the example shown in FIG. 3 are brought into a converse relationship. The two magnet arrays 2A and 2B are located opposite each other at a distance. The coil module pairs 3A and 3B are disposed between the magnet arrays 2A and 2B to face magnetic poles shown within the respective magnet arrays. The coil modules 3A and 3B are connected to each other by using the connecting member 5. The connection of the coil module pairs 3A and 3B may be accomplished by bonding the both with an adhesive agent or the like instead of using the connecting member.

In the coil module pair 3A, the coil module 3a and the coil module 3b are disposed at a prescribed arrangement interval L. The arrangement interval L is, as mentioned, the sum or remainder of the length corresponding to a half of any one of the cycles possessed by the cogging force generated when the coil modules move by one magnetic pole and an integer multiple of the length of a magnetic pole pair.

As for the coil module pair 3B, the coil module 3c and the coil module 3d are disposed at the prescribed arrangement interval L in the same manner.

The coil module pair 3A and the coil module 3B are sandwiched between the magnet array 2A and the magnet array 2B and disposed opposite the magnetic poles of the respective magnet arrays, thereby making integral motion due to the connecting member 5.

A pair of the magnet arrays and the coil modules does not necessarily have to be arranged along one straight line as illustrated in FIGS. 3 and 4, but may be arranged along a plurality of straight lines. FIGS. 5a and 5b each show an example in which a pair of the magnet arrays and the coil modules is arranged along two straight lines.

As mentioned, FIG. 5a diagrammatically shows a structure in which the pair of the magnet arrays and the coil modules is arranged along one straight line. In this structure, the coil module 3a and the coil module 3b are disposed along one of the magnet arrays 2, which is rectilinearly arranged, and there is provided the arrangement interval L between the coil module 3 a and the coil module 3b.

On the contrary, in a structure shown in FIG. 5b, there are provided two magnet arrays 2a and 2b that are rectilinearly arranged. The coil module 3a is disposed along the magnet array 2a, and the coil module 3b along the magnet array 2b. The arrangement interval L is provided between the coil module 3a and the coil module 3b. With this structure, the length of the coil module pair made up of the coil modules 3a and 3b can be decreased.

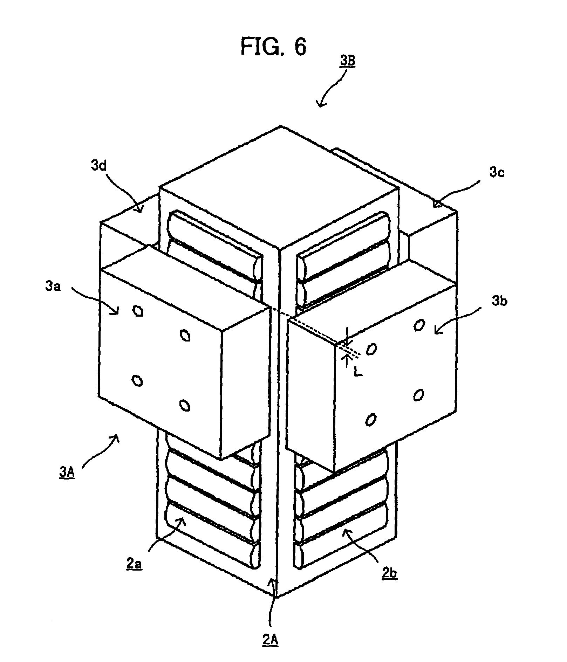

The structure examples shown in FIGS. 5a and 5b will be explained with reference to FIGS. 6 to 8.

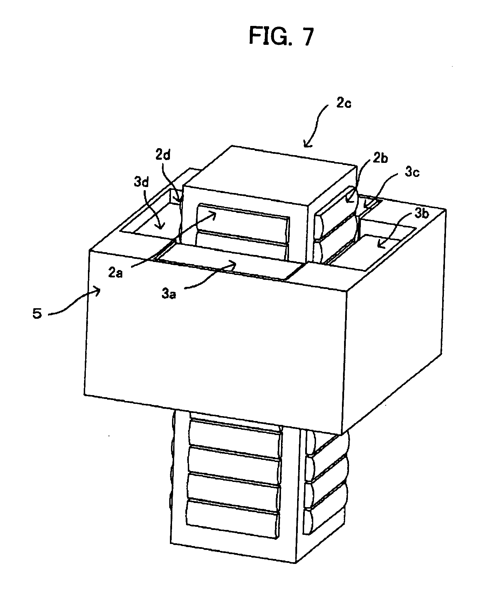

In the structure examples shown in FIGS. 6 and 7, the magnet array 2A is formed of the magnet array 2a and the magnet array 2b disposed at a right angle, and magnetic poles of the same cycle and the same phase are disposed along the displacing direction. Although not shown in the figures, the magnet array 2B is formed of two magnet arrays disposed at a right angle, and magnetic poles of the same cycle and the same phase are disposed along the displacing direction in the same manner.

Then, the coil module pair 3A is disposed with respect to the magnet array 2A, and the coil module pair 3B with respect to the magnet array 2B.

The coil module pair 3A is formed of the coil module 3 a and the coil module 3b. The coil module 3a is disposed opposite the magnet array 2a, and the coil module 3b opposite the magnet array 2b. The coil module 3a and the coil module 3b are spaced at the arrangement interval L.

Likewise, the coil module 3B is formed of the coil module 3c and the coil module 3d. The coil module 3c is disposed opposite the magnet array 2c (not shown), and the coil module 3d opposite the magnet array 2d (not shown). The coil module 3a and the coil module 3b are spaced at the arrangement interval L.

The arrangement interval L equals, as described, the sum or remainder of the length corresponding to a half of any one of the cycles possessed by the cogging force generated when the coil modules move by one magnetic pole and an integer multiple of the length of a magnetic pole pair.

FIG. 7 shows a structure in which the coil modules 3a to 3d formed as shown in FIG. 6 are connected by the connecting member 5 to move integrally.

By forming all the coil modules such that they move integrally, it is possible to reduce the cogging force and attraction of the permanent magnets and the coil modules.

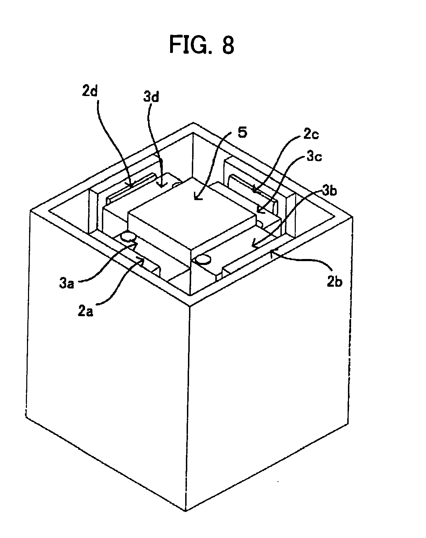

The relationship between the magnet arrays and the coil modules may be formed by disposing the magnet arrays outside, and the coil modules inside, as illustrated in FIG. 8. A structure example shown in FIG. 8 illustrates an example in which a positional relationship between the magnet arrays and the coil modules is made converse in the structure example of FIG. 7.

In the structure shown in FIG. 8, the coil modules 3a to 3d are disposed around the connecting member 5, and the magnet arrays 2a to 2d are disposed on the outer circumferential side of the coil modules. The coil module 3a and the coil module 3b are spaced at the arrangement interval L with respect to an arranging direction of the magnet arrays, to thereby form the coil module pair 3A. Additionally, the coil module 3c and the coil module 3d are spaced at the arrangement interval L with respect to the arranging direction of the magnet arrays, to thereby form the coil module pair 3B.

Among the magnet arrays 2a to 2d, the magnet arrays 2a and 2b form the magnet array pair 2A corresponding to the coil module pair 3A, and the magnet arrays 2c and 2d form the magnet array pair 2B corresponding to the coil module pair 3B.

In the above structure example, the cogging force and the attraction of the permanent magnets and the coil modules can be reduced by connecting the coil modules 3a to 3d by means of the connecting member 5 to make integral motion.

As shown in FIG. 2, the cogging force generated when a coil moves between a north pole and a south pole by one magnetic pole pair occurs as a compound of the plurality of cycles. In each of the above structures, the two coil modules are spaced at the prescribed arrangement interval, and the arrangement interval is set according to one of the plurality of cyclic components, to thereby reduce the cogging force of the cyclic component. Therefore, with the above structures, only one cyclic component among the plurality of cyclic components can be reduced.

The linear driving device of the present invention is capable of reducing the cogging force having n kinds of cycles by using coil modules including (the nth power of 2) × 2 coil modules.

A structure for reducing the cogging force having n kinds of cycles will be explained below.

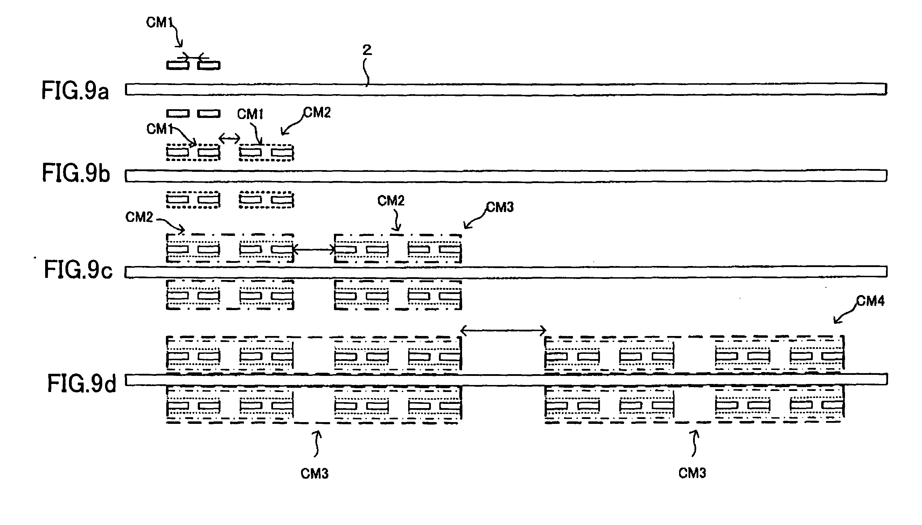

FIG. 9a shows a structure example for reducing one cyclic component, FIG. 9b a structure example for reducing two kinds of cyclic components, FIG. 9c a structure example for reducing three kinds of cyclic components, and FIG. 9d a structure example for reducing four kinds of cyclic components.

The structure example of FIG. 9a applies to the case in which the number of cycles n is "1". A first coil module pair CM1 is disposed on each side of the magnet array 2. The coil module pair CM1 is formed of two coil modules as described, and the arrangement interval between both the coil modules is set according to the cyclic component to be reduced (first cyclic component).

Therefore, the coil module pair located on one side requires two (= the first power of 2) coil modules. By disposing the coil module pair on each side of the magnet array 2, the number of the coil modules equals 4 (= 2 × 2).

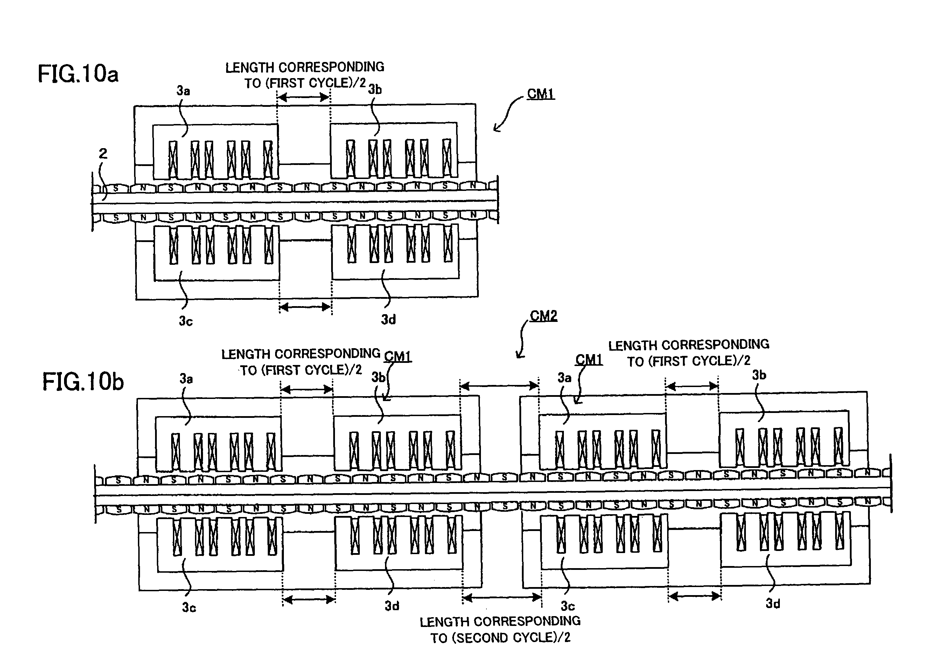

FIG. 10a shows a structure example of the first coil module pair CM1. An arrangement interval between the coil modules 3a and 3b is set on the basis of length of a half of the first cyclic component.

The structure example shown in FIG. 9b applies to the case in which the number of cycles n is "2". Two first coil module pairs CM1 are disposed on each side of the magnet array 2, to thereby provide a second coil module pair CM2. As mentioned, the arrangement interval of the first coil module pairs CM1 is set according to one cyclic component (first cyclic component) among the plurality of cyclic components.

The coil module pair CM2 is formed of two first coil module pairs CM1, and an arrangement interval between both the coil modules is set according to another cyclic component (second cyclic component) among the plurality of cyclic components.

Consequently, the second coil module pair CM2 located on one side requires four (= the second power of 2) coil modules. By disposing this coil module pair on each side of the magnet array 2, the number of the coil modules equals 8 (= 4 × 2).

According to the above structure, the coil modules included in the second coil module pairs CM2 are disposed at the arrangement intervals corresponding to two kinds of cyclic components (first and second cyclic components).

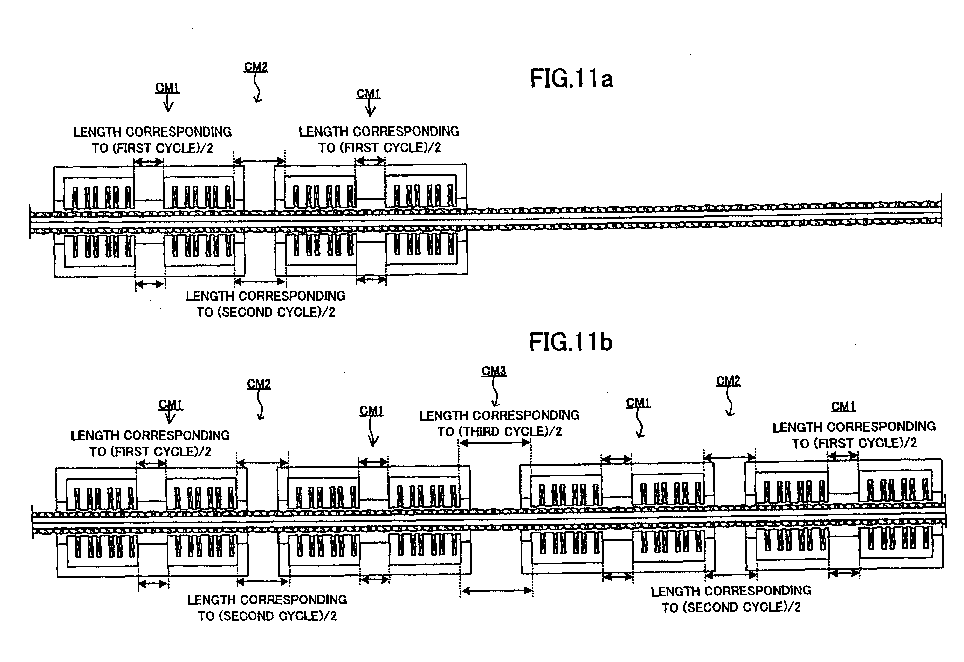

FIG. 10b and FIG. 11a show structure examples of the second coil module pair CM2. The arrangement interval between the coil modules 3a and 3b here is set on the basis of length of a half of the first cyclic component, and the arrangement interval of the first coil module pairs CM1 is set on the basis of length of a half of the second cyclic component.

The structure example shown in FIG. 9c applies to the case in which the number of the periods n is "3". Two second coil module pairs CM2 are disposed on each side of the magnet array 2, to thereby provide a third coil module pair CM3. The arrangement interval of the first coil module pairs CM1 is set according to one cyclic component (first cyclic component) among the cyclic components, and the arrangement interval of the second coil module pairs CM2 is set according to another cyclic component (second cyclic component) among the plurality of cyclic components.

The third coil module pair CM3 is formed of two second coil module pairs CM2, and the arrangement interval between both the coil modules is set according to further another cyclic component (third cyclic component) among the plurality of cyclic components.

Therefore, the third coil module pair CM3 located on one side requires eight (= the third power of 2) coil modules. By disposing this coil module pair on each side of the magnet array 2, the number of coil modules equals 16 (= 8 × 2).

According to the above structure, the coil modules included in the third coil module pairs CM3 are disposed at arrangement intervals corresponding to three kinds of cyclic components (first to third cyclic components).

FIG. 11b shows a structure example of the third coil module pair CM3. The arrangement interval between the coil modules 3a and 3b is set on the basis of length of a half of the first cyclic component. The arrangement interval of the first coil module pairs CM1 is set on the basis of length of a half of the second cyclic component. The arrangement interval of the second coil module pairs CM2 is set on the basis of length of a half of the third cyclic component.

The structure example of FIG. 9d applies to the case in which the number of the periods n is "4". Two third coil module pairs CM3 are disposed on each side of the magnet array 2, to thereby provide a fourth coil module pair CM4. The arrangement interval between the first coil module pairs CM1 is set according to one cyclic component (first cyclic component) among the cyclic components. The arrangement interval of the second coil module pairs CM2 is set according to another cyclic component (second cyclic component) among the plurality of cyclic components. The arrangement interval of the third coil module pairs CM3 is set according to another cyclic component (third cyclic component) among the plurality of cyclic components.

The fourth coil module pair CM4 is formed of two third coil module pairs CM3, and the arrangement interval between both the coil modules is set according to further another cyclic component (fourth cyclic component) among the plurality of cyclic components.

As a consequence, the fourth coil module pair CM4 located on one side requires sixteen (= the fourth power of 2) coil modules. By disposing this coil module pair on each side of the magnet array 2, the number of the coil modules equals 32 (= 16 × 2).

According to the above structure, the coil modules included in the fourth coil module pairs CM4 are disposed at the arrangement intervals corresponding to four kinds of cyclic components (first to fourth cyclic components).

## Claims

1. A linear driving device comprising:
a plurality of magnet arrays formed of permanent magnets arranged in parallel such that different magnetic poles thereof are aligned alternately; and
a plurality of coil modules arranged along said magnet arrays and connected with one another to move relatively to said magnet arrays, each of said coil modules having teeth and slots fitted with armature coils,
said coil modules being arranged with any one of arrangement distances obtained by respectively adding/subtracting lengths corresponding to halves of cycles of different cogging force elements produced when said coil module moves by a distance between adjacent permanent magnets of the same magnetic pole to/from multiples of the distance between the adjacent permanent magnets of the same magnetic pole.

2. A linear driving device according to claim 1, wherein adjacent twos of said coil modules form first coil-module pairs, the coil modules of each first coil-module pair being arranged with one of the arrangement distances; adjacent twos of said first coil-module pairs form second coil-module pairs, the first coil-module pairs of each second coil-module pair being arranged with another of the arrangement distances; and successively adjacent twos of previous coil-module pairs form subsequent coil-module pairs, the previous coil-module pairs of each subsequent coil-module pair being arranged with another of the arrangement distances.

3. A linear driving device according to claim 1, wherein said plurality of magnet arrays include at least one pair of magnet arrays arranged symmetrically with an axis of symmetry in a motion direction of said coil modules relative to said magnet arrays.

4. A linear driving device according to claim 1, further comprising a fluid bearing for movably supporting said coil modules relative to said magnet arrays.

5. A linear driving device comprising:
a first magnet array formed of permanent magnets arranged such that different magnetic poles thereof are alternately aligned;
a second magnet arrays formed of permanent magnets arranged such that different magnetic poles thereof are alternately aligned in parallel with said first magnet array;
a plurality of coil modules each having teeth and slots fitted with armature coils; and
a connecting member for connecting said plurality of coil modules to move relatively to said first and second arrays of permanent magnets,
wherein said plurality of coil modules include a first coil module confronting said first magnet array, a second coil module confronting said first magnet array and spaced apart from said first coil module in a direction of motion of the coil modules by one of distances obtained by adding/subtracting halves of cycles of different cogging force components produced when said first coil module moves by the distance of the adjacent permanent magnets of the same magnetic pole to/from multiples of the distance of the adjacent permanent magnets of the same magnetic pole, and third and fourth coil modules confronting said second magnet array and arranged at positions corresponding to said first coil module and said second coil module, respectively.

6. A linear driving device according to claim 5, wherein coil modules of (2ⁿ) × 2 (n: integer greater than 0) are provided to reduce n cycles of the different cogging force components.

7. A linear driving device according to claim 6, wherein two units of coil modules of 2ⁿ⁻¹ are arranged with one of the arrangement distances to confront one of said first magnet array and said second magnet array.

8. A linear driving device according to claim 5, further comprising a fluid bearing for movably supporting said connecting member relatively to said magnet arrays.

9. A linear driving device comprising:
a plurality of magnet arrays of permanent magnets arranged such that different magnetic poles are alternately aligned; and
a plurality of coil modules each having a plurality of teeth and slots fitted with armature coils, wherein
a first magnet array of the plurality of magnet arrays and a first coil module of the plurality of coil modules are arranged to confront each other to form a first set,
a second magnet array of the plurality of magnet arrays and a second coil module of the plurality of coil modules are arranged parallel to said first set of the first magnet array and the first coil module,
a third magnet array of the plurality of magnet arrays and a third coil module of the plurality of coil modules are arranged perpendicular to said first set of the first magnet array and the first coil module, and
a fourth magnet array of the plurality of magnet arrays and a fourth coil module of the plurality of coil modules are arranged perpendicular to said second set of the second magnet array and the second coil module,
adjacent two of said first to fourth coil modules are displaced by one of distances obtained by adding/subtracting lengths corresponding to halves of cycles of the cogging force components to/from the multiples of the distance between the adjacent permanent magnets of the same magnetic pole, and
said first to fourth coil modules are connected to move relatively to said first to fourth magnet arrays by a connecting member along said first to fourth magnet arrays.

10. A linear driving device according to claim 9, wherein coil modules of (2ⁿ) × 2 (n: integer greater than 0) are provided to reduce n cycles of the different cogging force components.

11. A linear driving device according to claim 10, wherein two units of coil modules of 2ⁿ⁻¹ are arranged with one of the arrangement distances perpendicularly with each other.

12. A linear driving device according to claim 9, further comprising a fluid bearing for movably supporting said connecting member relatively to said magnet arrays.
